# FASCICULE DE BREVET EUROPEEN

(11) **EP 1 226 641 B1**
(45) Date de publication et mention de la délivrance du brevet: **25.01.2006**
(21) Numéro de dépôt: 00968025.7
(22) Date de dépôt: 12.10.2000
(51) Int. Cl.: H02B 13/035

(54) **COMMUTATEUR ELECTRIQUE A ENVELOPPE METALLIQUE COMPARTIMENTEE POUR LA MISE EN PLACE DE SECTIONNEURS**
GESCHOTTETE METALLGEKAPSELTE SCHALTANLAGE ZUM EINSETZEN VON TRENNSCHALTERN
ELECTRICAL SWITCH WITH A METALLIC COMPARTMENTED JACKET FOR POSITIONING DISCONNECTORS

(30) Priorité: 15.10.1999 FR 9912875
(43) Date de publication de la demande: 31.07.2002
(73) Titulaire: Areva T&D SA, 92309 Levallois-Perret Cedex (FR)
(72) Inventeur: BUES, Michel, F-73100 Aix les Bains (FR)
(74) Mandataire: Poulin, Gérard
(86) Numéro de dépôt international: PCT/FR2000/002846
(87) Numéro de publication internationale: WO 2001/029945

(56) Documents cités:
- US-A- 5 796 060

## Description

L'invention porte sur un commutateur électrique blindé à enveloppe métallique et isolé au gaz notamment pour poste haute tension, comprenant notamment des appareils de déconnexion dont un premier et un second sectionneur disposés adjacents dans l'enveloppe pour assurer une fonction d'aiguillage d'une arrivée vers deux départs ou inversement.

Un tel commutateur peut servir à aiguiller une charge notamment dans un poste à simple jeu de barres (par exemple une configuration en H) ou à deux jeux de barres, ou peut aussi être utilisé dans une configuration du type un disjoncteur et demi, ou encore selon un schéma en boucle de façon connue.

On connaît de la demande de brevet GB-A-425107 un tel commutateur comportant un disque assurant la fonction de deux sectionneurs dans un même volume de l'enveloppe.

On connaît encore de la demande de brevet DE-3035870 un commutateur comportant un disque assurant la fonction de trois sectionneurs dans un même volume de l'enveloppe.

On connaît encore de la demande de brevet GB-2193843 un commutateur comportant un disque assurant la fonction de deux sectionneurs et d'une mise à la terre dans un même volume de l'enveloppe et dans lequel est en outre disposé un disjoncteur.

On connaît enfin de la demande de brevet WO-0024100 un commutateur comportant plusieurs sectionneurs à couteaux dont les couteaux sont disposés adjacents les uns aux autres dans un même volume de gaz et sont solidaires d'un arbre rotatif commun.

Dans chacun de ces commutateurs connus, et pour tout pôle du poste à haute tension, les sectionneurs et éventuellement le disjoncteur sont disposés dans un même volume de gaz diélectrique. Avec une telle disposition, un défaut électrique au niveau d'un des sectionneurs de charge du commutateur entraîne non seulement un arrêt de la fourniture de courant pour le pôle affecté, mais aussi par exemple la perte d'exploitation des deux jeux de barres pour ce pôle dans une configuration à deux jeux de barres, jusqu'à ce que le commutateur soit complètement déconnecté des jeux de barres.

En effet, la présence d'un arc électrique dû à un défaut dans l'enveloppe d'un tel commutateur entraîne d'une part une détérioration des pièces situées dans le volume de l'enveloppe et d'autre part une augmentation de la pression du gaz diélectrique dans le volume intérieur de l'enveloppe, ce qui peut déclencher la rupture de fenêtres frangibles de sécurité généralement prévues dans la paroi de l'enveloppe de sorte que le commutateur se vidange du gaz diélectrique. Tout défaut interne dans un volume du commutateur, à fortiori si ce défaut a entraîné l'évacuation du gaz à l'extérieur, oblige la mise et le maintien hors tension de tous les conducteurs et les bornes de connexion présents dans ce volume. Ainsi, dans une configuration à deux jeux de barres par exemple, ceux-ci ou tout au moins un tronçon de jeux de barres doivent être maintenus hors tension tant qu'ils restent raccordés au commutateur.

La déconnexion d'un commutateur pour un pôle du poste haute tension est une opération qui peut prendre plusieurs heures ce qui est très pénalisant pour l'exploitation d'un réseau électrique.

Le but de l'invention est de remédier à cet inconvénient.

A cet effet, l'invention a pour objet un commutateur électrique blindé à enveloppe métallique et isolé au gaz notamment pour poste à haute tension, comprenant au moins un premier et un second sectionneur disposés adjacents l'un à l'autre dans l'enveloppe, le premier sectionneur comprenant un couteau rotatif coopérant avec une première borne de connexion, le second sectionneur comprenant un second couteau rotatif coopérant avec une seconde borne de connexion, lesdits premier et second couteaux étant solidaires d'un arbre rotatif commun assurant une conduction électrique entre lesdits couteaux, caractérisé en ce que l'enveloppe a un volume intérieur qui est divisé en au moins deux compartiments séparés deux à deux par une cloison étanche, en ce que le premier sectionneur est disposé dans un premier desdits compartiments et le second sectionneur est disposé dans un second desdits compartiments, et en ce que l'arbre rotatif commun auxdits couteaux traverse de façon étanche la cloison séparant le premier et le second compartiment.
Ainsi, selon l'invention, les deux couteaux des deux sectionneurs adjacents sont disposés dans des volumes de gaz diélectrique différents, de sorte qu'un défaut affectant l'un des sectionneurs ne se répercute pas sur la tenue à la tension de l'autre sectionneur. Il est entendu qu'en cas de défaut dans un volume d'un commutateur, ce dernier peut être considéré hors service en ce sens qu'un courant ne peut continuer à transiter par l'arbre rotatif commun. Par contre, il est aussi entendu qu'un sectionneur a non seulement la fonction de transiter du courant en position fermée mais aussi de tenir la tension entre ses contacts en position ouverte. Ainsi, avec un compartimentage des sectionneurs selon l'invention, les cloisons étanches étant prévues pour soutenir la différence de pression de gaz diélectrique entre un compartiment sain et un compartiment en défaut, le sectionneur situé dans le compartiment sain resté sous pression est maintenu ouvert et peut tenir la tension entre le couteau et sa borne de connexion raccordée à une barre ou à une ligne. Dans une configuration à deux jeux de barres, le jeu de barres connecté à la borne de connexion du compartiment sain peut alors être remis sous tension et donc en exploitation. Le poste haute tension peut ainsi continuer à être exploité dans un mode dégradé en ce sens qu'un seul jeu de barres reste disponible.

Selon un mode de réalisation particulier d'un commutateur selon l'invention, un desdits couteaux coopère avec une troisième borne de connexion disposée dans le même compartiment que ledit couteau pour assurer une fonction de mise à la terre de sorte qu'une seule commande est nécessaire pour réaliser la fonction des deux sectionneurs d'aiguillage et la fonction de mise à la terre.

Selon encore un mode de réalisation particulier d'un commutateur selon l'invention, l'enveloppe comporte un troisième compartiment isolé de façon étanche des deux autres compartiments et dans lequel est disposé un disjoncteur ayant un contact mobile selon l'axe de l'arbre rotatif, ledit disjoncteur étant relié en série avec ledit arbre rotatif. Cette disposition du disjoncteur et de l'arbre rotatif dans l'enveloppe contribue à l'obtention d'une structure compacte du commutateur.

Selon encore un mode de réalisation particulier d'un commutateur selon l'invention, la première borne de connexion est électriquement reliée à l'enveloppe afin que le premier sectionneur puisse assurer une fonction de mise à la terre, et un troisième sectionneur comprenant un couteau rotatif coopérant avec une troisième borne de connexion est disposé adjacent au premier sectionneur dans le même compartiment que ce dernier ou dans un autre compartiment de l'enveloppe séparé du compartiment du premier sectionneur par une cloison étanche.

Selon encore un mode de réalisation particulier d'un commutateur selon l'invention, chaque couteau comporte un premier bras qui s'étend radialement depuis l'arbre rotatif et un second bras disposé dans le prolongement du premier bras sensiblement perpendiculairement à celui-ci.

Un exemple de réalisation d'un commutateur selon l'invention est décrit plus en détail ci-après et illustré sur les figures.

La figure 1 montre très schématiquement un commutateur selon l'invention, avec deux sectionneurs d'aiguillage et un disjoncteur.

La figure 2 illustre un montage analogue à celui de la figure 1 mais avec une connexion de terre assurée par un troisième couteau.

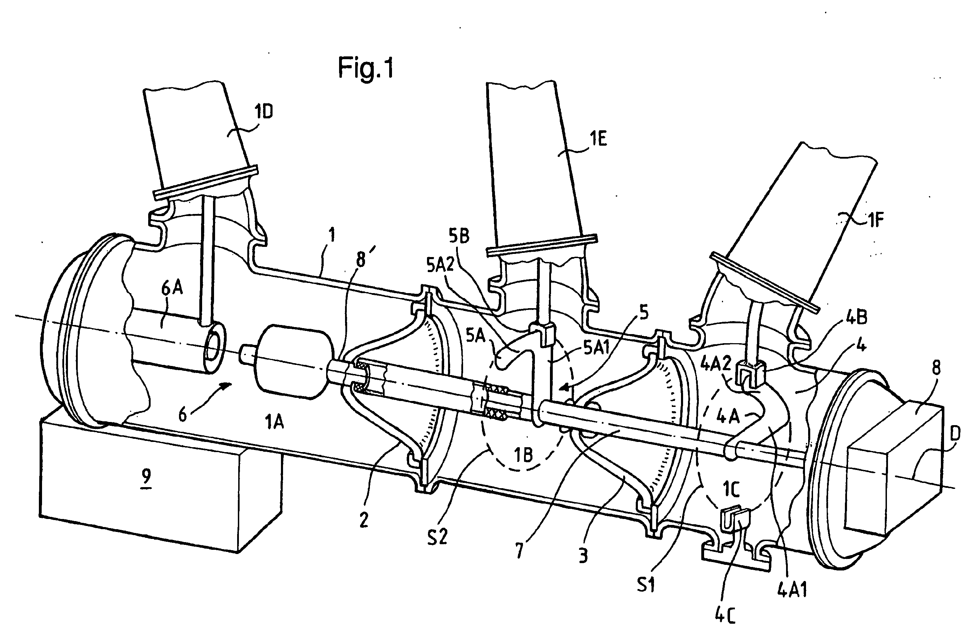

Sur la figure 1, le commutateur illustré peut servir à aiguiller une charge d'une arrivée vers deux départs ou inversement, dans une configuration de poste haute tension typiquement à deux jeux de barres. Le commutateur peut aussi être utilisé dans d'autres configurations de postes, par exemple dans des schémas du type un disjoncteur et demi ou en boucle. Il est entendu qu'un poste à haute tension ainsi équipé requiert un tel commutateur pour chaque pôle, c'est à dire pour chaque phase de courant.

Le commutateur comprend une enveloppe métallique 1 ici réalisée en trois tronçons cylindriques coaxiaux solidarisés bout à bout suivant une direction axiale D par boulonnage par exemple.

Le volume intérieur de l'enveloppe est rempli d'un gaz diélectrique comme du SF6 sous une pression de quelques bars et est divisé ici en trois compartiments 1A,1B,1C étanches entre eux à partir desquels partent des traversées aériennes 1D, 1E,1F respectivement.

Ces compartiments 1A à 1C sont séparés deux à deux par une cloison étanche 2 et 3 constituée ici par un cône en matière électriquement isolante fixé par pincement entre les lèvres des tronçons jointifs.

Un premier sectionneur de charge 4 est disposé dans le compartiment 1C et un second sectionneur de charge 5 adjacent au sectionneur 4 est disposé dans le compartiment 1B. Un disjoncteur 6 est disposé dans le compartiment 1A.

Le sectionneur 4 comprend un couteau 4A solidaire d'un arbre rotatif 7, lequel s'étend suivant la direction D et traverse de façon étanche la paroi 3. Le couteau rotatif 4A coopère avec une borne fixe de connexion 4B disposée dans le compartiment 1C sur le trajet circulaire S1 du couteau 4A.

Le sectionneur 5 comprend un couteau 5A solidaire de l'arbre rotatif 7. Le couteau 5A coopère avec une borne fixe de connexion 5B disposée dans le compartiment 1B sur le trajet circulaire S2 du couteau 5A.

Dans une configuration à deux jeux de barres par exemple, les bornes fixes de connexion 4B et 5B sont reliées respectivement à deux barres du jeu de barres et les couteaux 4A et 5A sont disposés sur l'arbre rotatif pour permettre plusieurs combinaisons d'aiguillage d'une charge provenant d'un conducteur de la traversée de départ 1D vers un conducteur de l'une ou l'autre ou des deux des traversées de sortie 1E et 1F, ces combinaisons correspondant à différentes positions angulaires de l'arbre rotatif 7. En outre, une troisième borne fixe 4C est disposée sur le trajet circulaire du couteau 4A et sert pour la mise à la terre de sorte qu'avec une seule commande de l'arbre 7, il est possible de réaliser les deux fonctions sectionneur et la fonction de mise à la terre. Il est entendu que la borne 4C est disposée de façon à établir une connexion avec le couteau 4A quand celui-ci est isolé de la borne 4B et que le couteau 5A est isolé de la borne 5B.

L'arbre rotatif 7 est manoeuvré par une commande 8 montée à l'extrémité libre du tronçon 1C à l'extérieur de l'enveloppe 1.

L'arbre rotatif 7 sert de conducteur électrique entre les deux sectionneurs 4 et 5 et est prolongé par une tige fixe conductrice 8' traversant de façon étanche la paroi 2 et qui relie électriquement en série le disjoncteur 6 avec l'arbre rotatif 7. Le disjoncteur 6 à un contact 6A mobile selon l'axe D de l'arbre rotatif 7 et est manoeuvré par une commande 9 extérieure à l'enveloppe 1 et disposée au voisinage du tronçon 1A.

Comme visible sur la figure, chaque couteau tel que 4A et 5A comporte un premier bras 4A1,5A1 respectivement qui s'étend radialement depuis l'arbre rotatif 7 et un second bras 4A2,5A2 respectivement qui est disposé dans le prolongement du premier bras respectivement 4A1 et 5A1 et qui s'étend sensiblement perpendiculairement à celui-ci le long d'un secteur du trajet circulaire S1,S2 du couteau 4A,5A respectivement.

Dans la construction du commutateur illustrée sur la figure, les deux bornes fixes 4B, et 5B sont alignées suivant la direction D et les bras 4A1 et 5A1 des deux couteaux 4 et 5 respectivement ont des positions angulaires décalées de telle façon qu'il existe un chevauchement partiel des secteurs définis par les bras 4A2 et 5A2 sur un cercle fictif coaxial à l'arbre rotatif 7. Avec cette construction, on obtient, pour différentes positions angulaires successives de l'arbre 7, des combinaisons multiples de connexion des deux couteaux 4A et 5A avec les bornes 4B,4C et 5B par le biais d'une seule commande 8 : deux sectionneurs ouverts, deux sectionneurs fermés, un sectionneur ouvert et l'autre fermé, deux sectionneurs ouverts avec une mise à la terre. Il est entendu que l'on pourrait tout aussi bien disposer les bornes fixes 4B et 5B avec des calages différents par rapport à la direction D et avoir des couteaux 4 et 5 alignés suivant la direction D.

Dans le cas d'un poste haute tension à plusieurs pôles avec un commutateur selon l'invention par pôle, les arbres rotatifs 7 de ces commutateurs peuvent être accouplés en mouvement par un engrenage ou un embiellage manoeuvré par une commande unique.

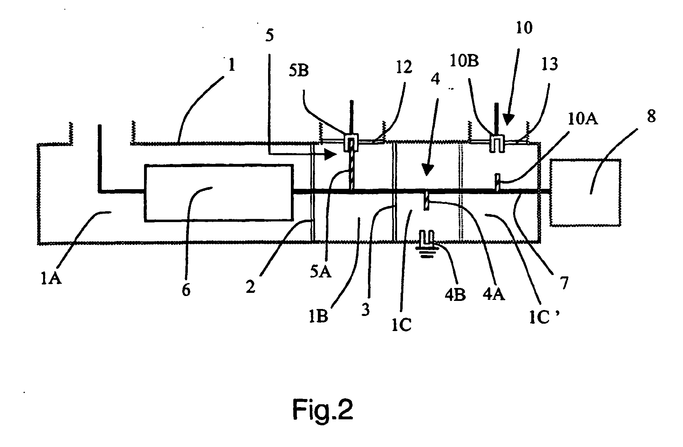

Sur la figure 2, on a illustré un autre montage d'un commutateur selon l'invention. Les mêmes références sur les figures 1 et 2 désignent des éléments identiques. Dans le montage de la figure 2, la borne de connexion 4B est électriquement reliée à l'enveloppe 1 de sorte que le sectionneur 4 avec le couteau 4A assure une fonction de mise à la terre. Un troisième sectionneur 10, comprenant un couteau rotatif 10A monté sur l'arbre rotatif 7 et coopérant avec une troisième borne de connexion 10B, est disposé adjacent au sectionneur 4. Le sectionneur 10 peut être disposé dans le même compartiment que le sectionneur 4 ou dans un autre compartiment 1C' séparé du compartiment 1C par une cloison étanche.

L'invention n'est pas limitée à un commutateur hybride avec des traversées aériennes d'entrée et/ou de départ telles que 1D,1E,1F, et peut s'appliquer à un commutateur relié à au moins un jeu de barre et/ou départ en technologie blindée. Sur la figure 2, on a représenté par 12 et 13 des cloisons séparant respectivement les compartiments 1C et 1C' de deux liaisons vers des lignes blindées d'aiguillage.

Enfin, le commutateur selon l'invention peut ne pas comporter de disjoncteur tel que 6 dans l'enveloppe 1. D'autre part, le compartiment 1A peut être prolongé, éventuellement sur plusieurs mètres, pour raccorder le commutateur à une configuration particulière de ligne blindée.

## Revendications

1. Un commutateur électrique blindé à enveloppe métallique (1) et à isolation au gaz, comprenant au moins un premier (4) et un second sectionneur (5) disposés adjacents l'un à l'autre dans l'enveloppe, le premier sectionneur comprenant un couteau rotatif (4A) coopérant avec une première borne (4B) de connexion, le second sectionneur comprenant un couteau rotatif (5A) coopérant avec une seconde borne (5B) de connexion, lesdits premier et second couteaux étant solidaires d'un arbre rotatif (7) commun assurant une conduction électrique entre lesdits couteaux, **caractérisé en ce que** l'enveloppe a un volume intérieur qui est divisé en au moins deux compartiments (1A,1B,1C) séparés deux à deux par une cloison étanche (2,3), **en ce que** le premier sectionneur est disposé dans un premier desdits compartiments et le second sectionneur est disposé dans un second desdits compartiments, et **en ce que** l'arbre rotatif (7) commun auxdits couteaux traverse de façon étanche la cloison (3) séparant le premier et le second compartiment.

2. Le commutateur selon la revendication 1, dans lequel le couteau rotatif (4A,5A) d'un sectionneur (4,5) coopère avec une troisième borne de connexion (4C) disposée dans le même compartiment que ledit couteau, afin d'assurer une fonction de mise à la terre.

3. Le commutateur selon l'une des revendications 1 ou 2, dans lequel l'enveloppe comporte un troisième compartiment (1A) isolé de façon étanche des deux autres compartiments et comprenant un disjoncteur (6) ayant un contact mobile (6A) qui se déplace le long de l'axe de l'arbre rotatif (7), ledit disjoncteur étant relié en série avec ledit arbre rotatif (7).

4. Le commutateur selon l'une des revendications 1 ou 3, dans lequel la première borne de connexion (4B) est électriquement reliée à l'enveloppe (1) afin que le premier sectionneur (4) puisse assurer une fonction de mise à la terre, et dans lequel un troisième sectionneur (10) comprenant un couteau rotatif (10A) coopérant avec une troisième borne de connexion (10B) est disposé adjacent au premier sectionneur.

5. le commutateur selon la revendication 4, dans lequel le troisième sectionneur (10) est disposé dans un compartiment (1C') séparé du compartiment (1C) du premier sectionneur (4) par une cloison étanche.

6. Le commutateur selon l'une des revendications 1 à 5, dans lequel chaque couteau (4A,5A) comporte un premier bras qui s'étend radialement depuis l'arbre rotatif et un second bras disposé dans le prolongement du premier bras sensiblement perpendiculairement à celui-ci.

## Patentansprüche

1. Geschotteter elektrischer Schalter mit einer Metallkapsel (1) und Gasisolierung, mit mindestens einem ersten (4) und einem zweiten Trennschalter (5), die aneinandergrenzend in der Kapsel angeordnet sind, wobei der erste Trennschalter ein Drehmesser (4A) umfasst, das mit einer ersten Verbindungsklemme (4B) zusammenwirkt, wobei der zweite Trennschalter ein Drehmesser (5A) aufweist, das mit einer zweiten Verbindungsklemme (5B) zusammenwirkt und die ersten und zweiten Messer einstückig mit einer gemeinsamen Drehwelle (7) sind, die eine elektrische Leitung zwischen den Messern herstellt, **dadurch gekennzeichnet, dass** die Kapsel ein Innenvolumen aufweist, das in mindestens zwei Fächer (1A,1B,1C) unterteilt ist, die untereinander durch eine dichte Trennwand (2,3) getrennt sind, dass der erste Trennschalter in einem ersten der Fächer angeordnet ist und der zweite Trennschalter in einem zweiten der Fächer angeordnet ist, und dass die den Messern gemeinsame Drehwelle (7) auf abdichtende Weise die das erste und zweite Fach trennende Trennwand (3) durchsetzt.

2. Schalter nach Anspruch 1, wobei das Drehmesser (4A,5A) eines Trennschalters (4,5) mit einer dritten Verbindungsklemme (4C) zusammenwirkt, die in dem gleichen Fach angeordnet ist wie das Messer, um eine Erdungsfunktion auszuüben.

3. Schalter nach einem der Ansprüche 1 oder 2, wobei die Kapsel ein drittes Fach (1A) umfasst, das auf abdichtende Weise von den beiden anderen Fächern isoliert ist und einen Ein-/Ausschalter (6) umfasst, der einen beweglichen Kontakt (6A) aufweist, welcher sich längs der Achse der Drehwelle (7) bewegt, wobei der Ein-/Ausschalter in Reihe mit der Drehwelle (7) verbunden ist.

4. Schalter nach einem der Ansprüche 1 oder 3, wobei die erste Verbindungsklemme (4B) mit der Kapsel (1) elektrisch verbunden ist, damit der erste Trennschalter (4) eine Erdungsfunktion ausüben kann, und wobei ein dritter Trennschalter (10) mit einem mit einer dritten Verbindungsklemme (10B) zusammenwirkenden Drehmesser (10A) angrenzend an den ersten Trennschalter angeordnet ist.

5. Schalter nach Anspruch 4, wobei der dritte Trennschalter (10) in einem separaten Fach (1C') des Fachs (1C) des ersten Trennschalters (4) mittels einer dichten Trennwand angeordnet ist.

6. Schalter nach einem der Ansprüche 1 bis 5, wobei jedes Messer (4A,5A) einen ersten Arm umfasst, der sich radial von der Drehwelle weg erstreckt, sowie einem zweiten Arm, der in der Verlängerung des ersten Arms im wesentlichen senkrecht zu diesem angeordnet ist.

## Claims

1. A metal-clad electric switch having gas insulation and a metal case (1), the switch comprising at least first and second load disconnectors (4, 5) placed adjacent to each other inside the case, the first disconnector comprising a rotary blade (4A) co-operating with a first connection terminal (4B), the second disconnector comprising a rotary blade (5A) co-operating with a second connection terminal (5B), said first and second blades being secured to a common rotary shaft (7) providing electrical conduction between said blades, the switch being **characterized in that** the case has an inside volume which is subdivided into at least two compartments (1A, 1B, 1C) separated in pairs by respective leakproof partitions (2, 3), **in that** the first disconnector is placed in a first of said compartments and the second disconnector is placed in a second of said compartments, and **in that** the rotary shaft (7) common to said blades passes in leakproof manner through the partition (3) separating the first and second compartments.

2. The switch of claim 1, in which the rotary blade (4A, 5A) of a disconnector (4, 5) co-operates with a third connection terminal (4C) disposed in the same compartment as said blade so as to provide a grounding function.

3. The switch of claim 1 or claim 2, in which the case has a third compartment (1A) isolated in leakproof manner from the other two compartments and containing a circuit breaker (6) having a moving contact (6A) which moves along the axis of the rotary shaft (7), said circuit breaker being connected in series with said rotary shaft (7).

4. The switch of claim 1 or claim 3, in which the first connection terminal (4B) is electrically connected to the case (1) so that the first disconnector (4) can perform a grounding function, and in which a third disconnector (10) comprising a rotary blade (10A) co-operating with a third connection terminal (10B) is placed adjacent to the first disconnector.

5. The switch of claim 4, in which the third disconnector (10) is placed in a compartment (1C') separate from the compartment (1C') separated from the compartment (1C) of the first disconnector (4) by a leakproof partition.

6. The switch of any one of claims 1 to 5, in which each blade (4A, 5A) comprises a first arm which extends radially from the rotary shaft and a second arm placed to extend the first arm substantially perpendicularly thereto.
